# EUROPEAN PATENT APPLICATION

(11) **EP 1 616 688 A2**
(43) Date of publication of application: **18.01.2006**
(21) Application number: 05076589.0
(22) Date of filing: 12.07.2005
(51) Int. Cl.: B29C 49/78, B29C 49/66

(54) **Method for blow moulding objects**

(30) Priority: 14.07.2004 BE 200400346
(71) Applicant: Delta Engineering, 9500 Ophasselt (BE)
(72) Inventor: de Bruyn, Danny, 1770 Liedekerke (BE); Lemeire, Rudy, 9420 Erpe-Mere (BE)
(74) Representative: Donné, Eddy

(57) **Abstract**

A method for blowing objects, in which the following steps are successively followed: providing a synthetic sleeve (14) in a mould (1); inflating this sleeve (14) by means of compressed air up to a maximum pressure; and scavenging the obtained object (4) by means of a compressed air flow, whereby the air in the object (4) is continuously refreshed, wherein the pressure of the compressed air varies from a start pressure to the atmospheric pressure according to an adjustable course which varies as a function of time.

## Description

The present invention concerns a method for blowing objects, such as bottles, canisters or the like.

It is known that hollow, plastic objects can be formed by what is called "twin sheet molding", which consists of welding two vacuum-formed pieces together and cooling them. For this technique, use is made of a blowing needle or blowing mandrel in the known manner.

It is also known that such objects can be blown out of plastic, whereby a synthetic sleeve is inserted in a mould having the shape of the object to be made and this sleeve is then inflated by means of compressed air, and the formed object is taken out of the mould after cooling off.

For blowing, this known technique makes use of a blowing mandrel or blowing needle.

Inflating is usually done with pre-blowing, whereby the inflating takes place at a small air pressure which is then increased to the available pressure in the compressed air network.

According to a known method, known as "interval blowing", the compressed air supply is alternately opened and closed while blowing, such that a pulsating pressure is obtained.
A disadvantage of this technique consists in that the compressed air network is heavily loaded by alternately opening and closing the compressed air supply, leading to wear of valves and compressors which are part of the compressed air network. It is also known that applying such modulating on/off switches requires a lot of energy.

Another disadvantage of this technique is that the heat created while forming the object can only be given off with difficulty.

According to another known method, known as "blowing with scavenging air", in order to cool the formed object, the air is continually refreshed during the blowing by scavenging it at a maximum pressure, as the outgoing air is not shut off.

A disadvantage of this technique is that, in order to scavenge at a maximum pressure, only a relatively small flow rate is available, which is disadvantageous in that relatively much time is required for the cooling, and as a consequence the productive capacity is relatively low.

Another disadvantage nf this technique is that relatively much time is required to de-aerate and to lower the pressure in the blown object from the maximum pressure to the atmospheric pressure without deforming the obtained object, which consequently has a negative influence on the productive capacity.

Another disadvantage of this technique is that the air escaping from the blowing mandrel produces noise.

According to another known method, known as "blowing with scavenging air while maintaining an adjustable pressure", after a certain length of time, the air is continuously refreshed during the blowing, whereby a lower adjustable pressure is maintained in the object made.

Although the time required to de-aerate from this lower pressure to the atmospheric pressure is shorter than with the above-mentioned other known methods, said de-aeration time still takes relatively long.

With this method as well, the flow rate of the scavenging air is still restricted, which is at the expense of the time required to cool the formed object, and which is thus at the expense of the productive capacity.

The present invention aims to remedy the above-mentioned and other disadvantages, whereby the scavenging for the cooling requires less time and thus allows for larger productive capacities.

To this end, the present invention concerns a method for blowing objects whereby the following steps are successively followed: providing a synthetic sleeve in a mould; inflating this sleeve by means of compressed air up to a maximum pressure; and scavenging the obtained object by means of a compressed air flow whereby the air in the object is continuously refreshed and whereby the pressure of the compressed air varies from a starting pressure to the atmospheric pressure according to an adjustable course which varies as a function of time.

An advantage of this method is that the pressure may increase and/or decrease according to any desired pattern, whereby the course of the pressure as a function of time can be selected such that the pressure decreases consistently, for example in a continuous manner or in stages, as a result of which the scavenging flow rate may consistently increase in the same ratio.

As a consequence, the de-aeration time is considerably shorter than with known methods, such that the blown product is sooner ready for further processing. As a result, the cycle time decreases considerably and the efficiency of the production process increases.

An additional advantage is that scavenging air can be recycled when it leaves the object to be formed, provided a compressor is applied. Since the pressure of the scavenging air, when it leaves the object to be formed, is usually larger than the atmospheric pressure, said recycling may result in a considerable energy saving in order to maintain the compressed air network.

Another advantage of the method according to the invention is that the compressed air network is less heavily loaded with less fluctuations, as a result of which there is less wear and energy is saved.

In order to better explain the characteristics of the present invention, the following preferred method according to the invention for blowing objects is given as an example only without being limitative in any way, with reference to the accompanying drawings, in which:
figures 1 to 6 are successive steps of a method according to the invention;
figures 7 and 8 schematically represent a possible course of the pressure as a function of time, during the step represented in figure 6.

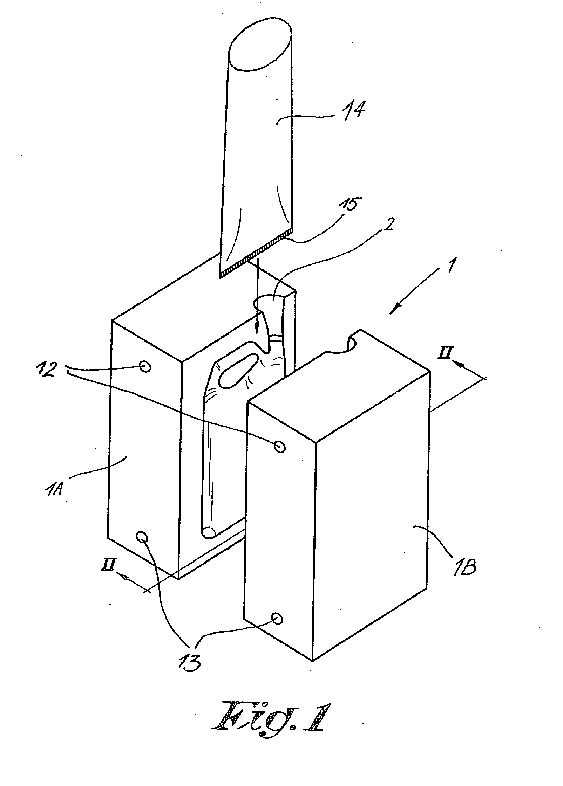

Figures 1 to 5 represent a mould 1 for blowing synthetic objects, for example in this case canisters for storing liquids, which mould 1 is made in two parts in the known manner, whereby these two mould parts 1A and 1B can be moved away from each other and towards each other by means of a driving mechanism which is not represented in the figures.

In the above-mentioned mould 1 is provided at least one opening 2 in which can be provided a blowing needle or blowing mandrel 3 to blow an object 4.

The above-mentioned blowing mandrel 3 in this case consists of two concentric ducts for compressed air, more specifically an inner supply duct 5 and an outer discharge duct 6.

The supply duct 5 is hereby connected to a compressed air network 7 which may for example be provided with an adjustable inlet cock 8.

The outlet of the discharge duct 6 is, in this case, connected to the atmosphere via an adjustable throttle valve 9, which throttle valve 9 is preferably connected to a control 10 which makes it possible to open and close this throttle valve 9 according to an imposed program which is stored for example in a computer 11.

In this case, each of the mould parts 1A and 1B is provided with an internal cooling channel, not represented here, with an inlet 12 and an outlet 13.
The method for blowing objects according to the invention is very simple and as follows.

Initially, a sleeve 14 made of plastic or the like is taken, which in this case is realized according to a first known step, starting from a hose which is extruded and which is then cut at a certain length and is squeezed at the cut end 15.

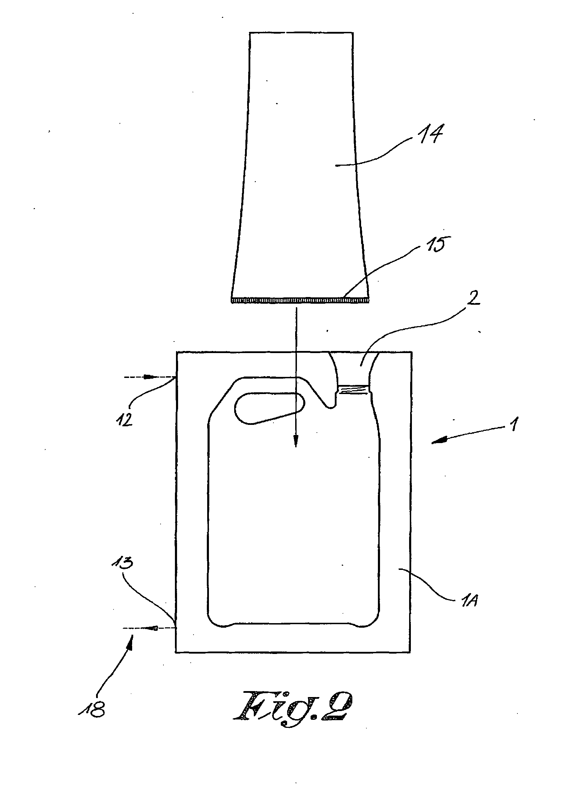

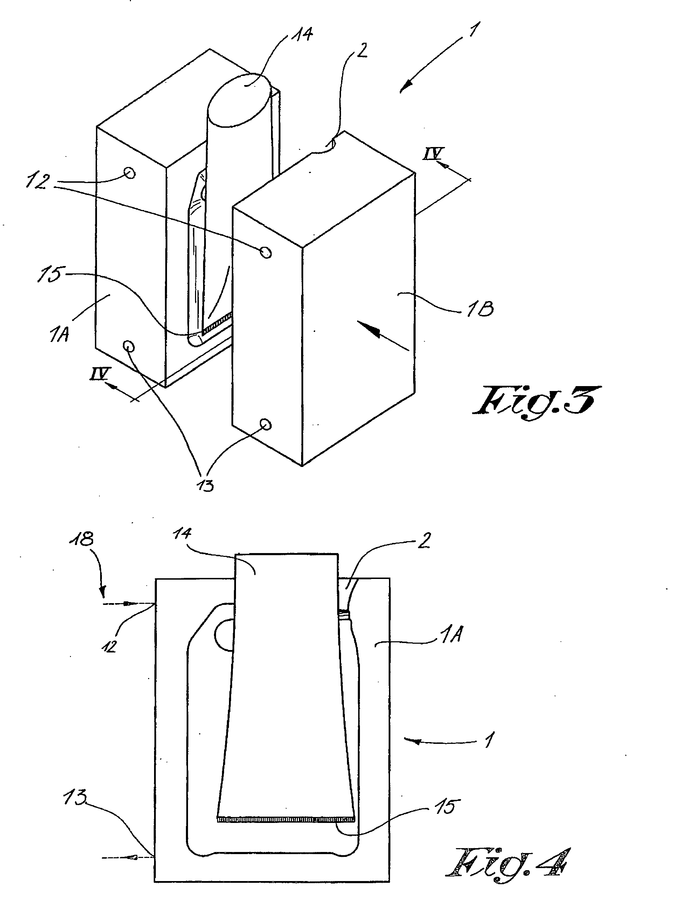

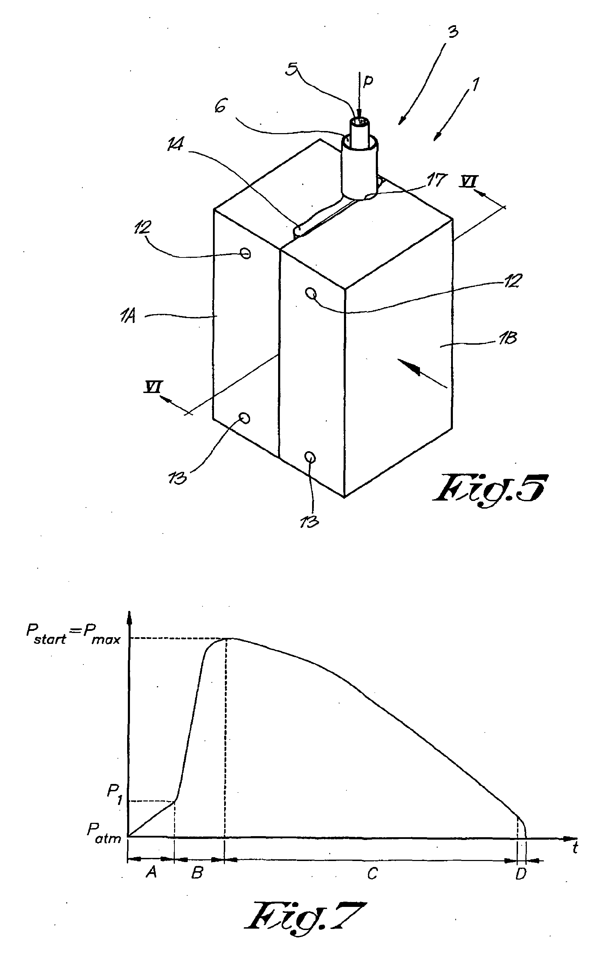

The sleeve 14 is then, as represented in figures 1 and 2, provided between the two mould parts 1A and 1B, after which these mould parts 1A and 1B, as represented in figure 3, are pressed against each other by means of the above-mentioned driving mechanism, and the sleeve 14 protrudes out of the mould 1 via the opening 2, as is represented in figure 4.

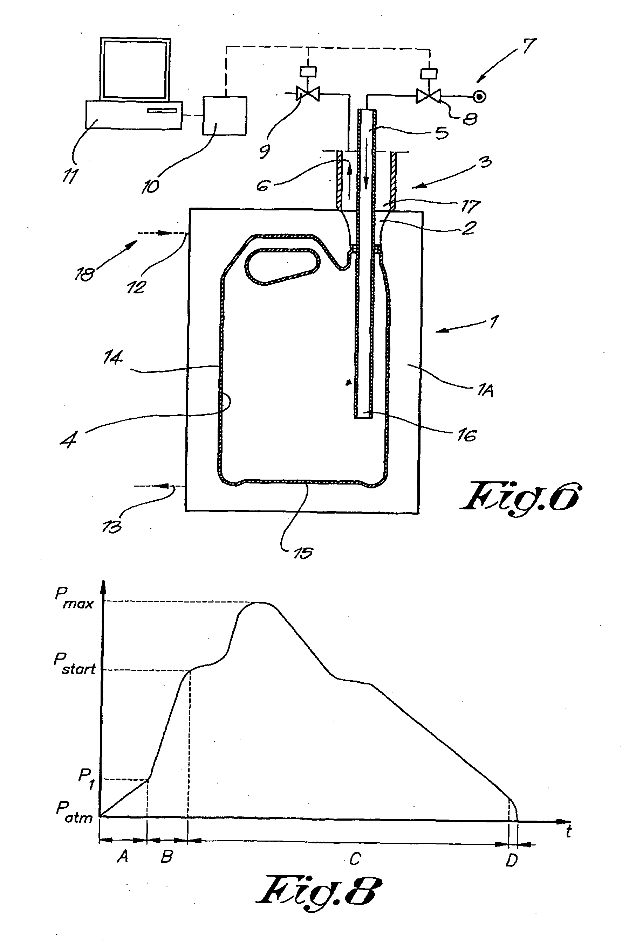

Next, as represented in figure 5, the blowing mandrel 3 is provided in the opening of the sleeve 14, whereby the outlet 16 of the supply duct 5 sticks in the mould 1 and the discharge duct 6 is connected to one far end 17 around the above-mentioned opening 2 on top of the mould 1.

This so-called "shooting" of the blowing mandrel takes place at a low compressed air pressure, such that the compressed air flow rate is restricted as well.

Then, as is represented in figure 6, compressed air is blown into the sleeve 14 via the blowing mandrel 3, so as to blow this sleeve 14 up against the walls of the mould 1, such that the sleeve 14 assumes the shape of these walls so as to form the required object 4. This is done by connecting the maximum available compressed air pressure, such that an increased contact with the walls of the mould is obtained.

After a certain adjustable length of time, a decrease of pressure can be realized in the formed object 4 according to a desired variation, by controlling the adjustable inlet cock 8 and/or the throttle valve 9, whereby this control is preferably such that a pressure variation as a function of time is obtained, as is represented in figures 7 and 8, which represent the relative pressure P in relation to the atmospheric pressure as a function of time t.

From figure 7 can be derived that, during a first time span A, the sleeve 14 is first inflated at a low pressure which systematically increases from the atmospheric pressure Pₐₜₘ to a relatively low pressure P₁, after which, during a time span B, the pressure is quickly raised up to a desired start pressure Pₛₜₐᵣₜ, which is for example the maximum available pressure in the compressed air network 7, so as to obtain more contact between the sleeve 14 and the mould walls.

Next, according to the invention, during a following time span C for cooling, scavenging air is blown through the formed object 4, whereby, during this phase, the pressure in the object 4 is consistently reduced according to a continuous curve from the start pressure, here Pₘₐₓ, to Pₐₜₘ, i.e. for an appropriate control of the throttle valve 9.

It is clear that, since during this time span C the pressure consistently decreases, the flow rate for scavenging will increase in the opposite sense, such that, in a relatively short time span C, a sufficient cooling of the object 4 can be obtained which makes it possible to take the object 4 out of the mould without any unwanted deformations.

Additionally, for an even faster cooling of the object 4, the cooling channel extending through the mould 1 can be connected, during the blowing, to an external cooling circuit 18, having for example water as a cooling medium.

While blowing, the compressed air itself is preferably cooled to an adjustable temperature as well, which may be either higher or lower than zero degrees Celsius. Thus, the decrease of pressure can be faster, since the blown object 4 has to cool less long, and the de-aeration time D thus decreases, and the production speed and the output of the blowing process increase.

According to the invention, the decrease of pressure in area C can be obtained by successively going through more than one adjustable discrete pressure value or, when using an unlimited number of such adjustable pressure values, by running through a continuously adjustable curve, whereby the last set pressure value can amount to zero bar relative pressure in relation to the atmospheric pressure.

After having run through the area C, the formed object 4 can be removed from the mould 1, after which any possible excess flashes or the like can be removed from this object 4 by means of punching, grinding or the like.

Although in the given example, the start pressure is equal to the maximum pressure Pₘₐₓ that is to be reached in time span C, it is also possible to start time span C at a start pressure Pₛₜₐᵣₜ that is lower than Pₘₐₓ, as is represented in figure 8.

In this case, the set pressure values from the incoming compressed air during the scavenging temporarily increase from a value Pₛₜₐᵣₜ to a value Pₘₐₓ which is higher than the aforesaid Pₛₜₐᵣₜ value.

Although in the given example, the inlet cock 8 and the throttle valve 9 are automatically adjusted, it is not excluded for such control to be realized manually.

The above-mentioned throttle valve 9 and/or inlet cock 8 for adjusting the decrease of pressure is preferably a proportional valve. This offers the advantage that a simple control circuit can be used for controlling the decrease of pressure.

It is clear that by "compressed air" should not only be understood air, but that any gas under pressure whatsoever can be used for blowing an object by means of a method according to the present invention.

It is also clear that the above-mentioned sleeve 14 can be made of any material whatsoever which is suitable to be inflated.

Further, it is clear that the above-described technique can be applied to any production process whereby the object to be formed is made by means of compressed air and must be cooled.

Finally, it should be noted that the scavenging air, when leaving the object to be formed, can be recycled, for example by providing a compressor at the outlet of the discharge ducts 6 which compresses the scavenging air to a required pressure and whose high pressure side is connected to the compressed air network.

The present invention is by no means limited to the embodiments given as an example and represented in the accompanying drawings; on the contrary, such a method for blowing objects can be made according to different variants while still remaining within the scope of the invention.

## Claims

1. Method for blowing objects whereby the following steps are successively followed: providing a synthetic sleeve (14) in a mould (1); inflating this sleeve (14) by means of compressed air up to a maximum pressure (Pₘₐₓ); and scavenging the obtained object (4) by means of a compressed air flow, whereby the air in the object (4) is continuously refreshed, **characterized in that** the pressure of the compressed air varies from a start pressure (Pₛₜₐᵣₜ) to the atmospheric pressure (Pₐₜₘ) according to an adjustable course which varies as a function of time.

2. Method according to claim 1, **characterized in that** the variation of the compressed air pressure goes through more than one adjustable discrete pressure value.

3. Method according to claim 1, **characterized in that** the variation of the compressed air pressure is continuous.

4. Method according to claim 1, **characterized in that** the above-mentioned pressure values are set manually by means of a hand valve.

5. Method according to claim 1, **characterized in that** the above-mentioned pressure values are set by means of an automatically controlled inlet cock (8) at the supply of the compressed air and/or an automatically controlled throttle valve (9) at the discharge of the compressed air out of the object (4).

6. Method according to claim 5, **characterized in that** the above-mentioned inlet cock (8) is a proportional valve.

7. Method according to claim 5, **characterized in that** the above-mentioned throttle valve (9) is a proportional valve.

8. Method according to claim 1, **characterized in that** the above-mentioned sleeve (14) is inflated by means of a blowing mandrel (3).

9. Method according to claim 1, **characterized in that** the above-mentioned sleeve (14) is inflated by means of a blowing needle.

10. Method according to claim 1, **characterized in that** the compressed air is cooled to an adjustable temperature.

11. Method according to claim 1, **characterized in that** the above-mentioned mould is cooled during the blowing and/or scavenging.

12. Method according to claim 1, **characterized in that** the compressed air at the outlet (13) of the discharge (6) for compressed air out of the object (4) is compressed by means of a compressor.

13. Method according to claim 12, **characterized in that** the above-mentioned compressed air is used again as compressed air or scavenging air.
